# EUROPÄISCHE PATENTANMELDUNG

(11) **EP 2 058 380 A2**
(43) Veröffentlichungstag der Anmeldung: **13.05.2009**
(21) Anmeldenummer: 08019450.9
(22) Anmeldetag: 06.11.2008
(51) Int. Cl.: C09K 5/04

(54) **Kältemittelmischung und Kühlsystem enthaltend Kältemittelmischung**

(30) Priorität: 08.11.2007 DE 102007053608
(71) Anmelder: GFL Gesellschaft für Labortechnik mbH, 30938 Burgwedel (DE)
(72) Erfinder: Nürnberger, Friedhelm, 30938 Burgwedel (DE)
(74) Vertreter: Kröncke, Rolf

(57) **Zusammenfassung**

Die vorliegende Erfindung betrifft Kältemittelmischungen geeignet für Tiefkühlgeräte zur Kühlung in einem Bereich von bis zu -100°C, Kühlsysteme diese Kältemittelmischungen enthaltend und deren Verwendung. In einem weiteren Aspekt richtet sich die vorliegend Erfindung auf Kaskadenkühlsysteme, bei der die erfindungsgemäßen Kältemittelzusammensetzungen insbesondere in der Niedrigtemperaturstufe eingesetzt werden.

## Beschreibung

Die vorliegende Erfindung betrifft eine Kältemittelmischung, die kein FCKW oder FKW enthält und die geeignet ist in Bereichen von bis zu -100°C zu kühlen. Insbesondere betrifft die vorliegende Erfindung eine Kältemittelmischung die als Kältemittel Ethen oder eine Mischung aus Ethen und Ethan aufweist. Weiterhin betrifft die vorliegende Erfindung ein Kaskadenkühlungssystem enthaltend die erfindungsgemäße Kältemittelmischung sowie Kühlsysteme, insbesondere Tiefkühlsysteme, die diese Kältemittelmischung enthalten.

### Stand der Technik

Die Verwendung von flourierten oder Fluor-Chlor modifizierten Kohlenwasserstoffen als zum Beispiel Kältemittel, Treibmittel oder Lösemittel um nur einige der bekannten Anwendungsgebiete zu nennen, ist bekannt. Aufgrund der Erkenntnis, dass diese Fluorchlorkohlenwasserstoffe (FCKW) und Fluorkohlenwasserstoffe (FKW) deutlich zum Abbau der Ozonschicht in der Stratosphäre beitragen, wurde und wird nach wie vor versucht diese Verbindungen durch Fluor beziehungsweise chlorfreie Verbindungen zu ersetzen. Insbesondere im Bereich der Kältetechnik besteht hier nach wie vor ein hoher Bedarf an Substanzen, die diese FCKW und FKW basierten Kältemittel ersetzen.

Seit den 70er und 80er Jahren des letzten Jahrhunderts ist die schädliche Wirkung der FCKW und der FKW bekannt. Seit dieser Zeit gibt es intensive Bemühungen diese durch Verbindungen, die nicht zum Abbau der Ozonschicht oder nur zu einem verringerten Abbau der Ozonschicht in der Stratosphäre beitragen, zu ersetzen und entsprechend als Treibgase oder Kältemittel einzusetzen. Eine Möglichkeit wurde in der Verwendung von so genannten H-FCKW, das heißt teilhalogenierte Fluorchlorkohlenwasserstoffe gesehen, bei denen Wasserstoffatome nur teilweise durch Chlor- und Fluoratome ersetzt sind. Diese besitzen zwar ein weitaus geringeres Ozon-Abbaupotenzial als die FCKW, allerdings weisen sie nach wie vor die schädigende Wirkung auf die Atmosphäre auf.

Allgemein transportieren Kältemittel Enthalpie weg von dem Kühlgut und hin zur Umgebung. So ist zum Beispiel ein Kältemittel definiert als "Fluid, das zur Wärmeübertragung in einer Kälteanlage eingesetzt wird, und das bei niedriger Temperatur und niedrigem Druck Wärme aufnimmt und bei höherer Temperatur und höherem Druck Wärme abgibt, wobei möglicherweise Zustandsänderungen des Fluids erfolgen (DIN 378-1), beziehungsweise gemäß DIN 8960: "Arbeitsmedium, das in einem Kältemaschinenprozess bei niedriger Temperatur und niedrigem Druck Wärme aufnimmt und bei höherer Temperatur und höherem Druck Wärme abgibt." Diese genannten Wirkungen können zum Beispiel durch Verflüssigung oder bei Kältemischungen durch Entmischung erzielt werden.

Gerade im Bereich der Kälteerzeugung im Temperaturbereich unterhalb von - 50°C zum Beispiel im Bereich von unter -50°C bis -100°C, wie bis -85°C wurden bevorzugt die halogenen Kohlenwasserstoffe, wie Freon oder Frigen (R502) in Kombination mit R13 oder R23 in einer zweiten Stufe einer Kaskadenkühlung, eingesetzt. Deren Anwendung wurde aber in den 80er Jahren aufgrund ihrer negativen Wirkungen auf die Ozonschicht und ihrer Förderung des Treibhauseffekts stark eingeschränkt. Als Ersatz wurden fluorierte Kohlenwasserstoffe (FKW) eingesetzt, da diese kein Ozonabbaupotenzial aufweisen. Allerdings beeinflussen die Fluorkohlenwasserstoffe nach wie vor die Atmosphäre und tragen zur Erderwärmung bei, entsprechend wurden die als Ersatzkaltemittel für FCKW- Kältemittel in Betracht gezogenen Verbindungen ebenfalls vermieden.

Es wurde zum Beispiel mit der europäischen F-Gas-Verordnung Maßnahmen zur Reduzierung von Emissionen aus Kälteanlagen getroffen. Es handelt sich im Gegensatz zu der bekannten FCKW-Verbotsverordnung nicht um ein Verwendungsverbot, sondern durch höhere Anforderungen an die Ausführung und Wartung von Kälteanlagen sollen die Leckagemengen reduziert werden. Entsprechend dürfen in Kälteanlagen zum Beispiel nur F-Gase mit einem GWP (Global Warming Potential) Wert von unter 150 eingesetzt werden, dieses gilt bei der Gruppe der FKW nur für das Kältemittel R 152 A, 1,1-Diflourethan.

Derzeit werden zur Kälteerzeugung im Temperaturbereich unterhalb von -50°C bevorzugt Kaskadenkälteanlagen verwendet, die in der mindestens zweiten Stufe (Niedrigtemperaturstufe) zum Beispiel mit den Kältemitteln Trifluorethan CHF₃ oder zum Beispiel mit azeotropen Gemischen aus CHF₃ / C₂ F₆ oder Ethan (C₂H₆) betrieben werden. Alternativ werden Kaskadenschaltungen genutzt, die mit Kohlendioxid CO₂ betrieben werden, bevorzugt werden diese CO₂ Anlagen im Bereich von -40°C bis -55°C eingesetzt. In der ersten Stufe (Hochtemperaturstufe) von solchen Kaskadenkälteanlagen finden zum Beispiel die nicht halogenierten brennbaren Kohlenwasserstoffe wie Butan oder Propan Anwendung.

Es werden zum Beispiel für Bereiche bis -20°C Kühl- und Gefrierschränke angeboten, die ausschließlich mit nicht halogenierten Kohlenwasserstoffen betrieben werden. Allerdings ist dies in größeren Kälteanlagen aufgrund der erforderlichen Explosionsschutzmaßnahmen nicht möglich.

Als weiteres Kältemittel trat Kohlendioxid in den Fokus als Ersatzmittel für flourierte Gase. Dieses Kältemittel hatte bereits jahrzehntelange Tradition als Kältemittel, beispielsweise in Schiffskälteanlagen. Allerdings liegt die Tripletemperatur von CO₂ bei -56,6°C, was den Einsatz dieses Gases in Kaskadenschaltungen unterhalb von rund -55°C nicht möglich macht. Zur Überwindung dieses Problems wird zum Beispiel in der DE 10 2005 014 552 eine Kältemittelmischung aus Kohlenstoffdioxid und Distickstoffoxid vorgeschlagen. Allerdings erfordert die Verwendung von Kohlenstoffdioxid hohe Systemdrucke, die Neuentwicklungen der kältetechnischen Komponenten erforderlich machen.

Aus der US 4,584,006 sind Verfahren zur Gewinnung von Propan und schweren Kohlenwasserstoffen aus Erdgas bekannt. Die beschriebenen Kältemittel enthalten zumindest Propan und Isopentan neben Ethen. Optional können weiterhin Methan, Ethan, Isobutan und n-Butan enthalten sind. Die DE 10 2005 038 266 A1 beschreibt Kaltemittelmischungen aus Methan, Ethan oder Ethylen, Propan oder Propylen, Butan und höheren Kohlenwasserstoffen und Stickstoff. Diese Mischungen sind in Kaskadensystemen einsetzbar, Solche Mischungen weisen im täglichen Einsatz aber Probleme auf, wie oben bereits ausgeführt und insbesondere die ökonomischen und ökologischen Probleme und Aufgaben sind noch verbesserbar.

Der Erfindung liegt die Aufgabe zugrunde, ein Kältemittel, insbesondere ein Kältemittelgemisch bereit zu stellen, das ungiftig aus natürlichen Verbindungen zusammengesetzt ist und das eine möglichst geringe Umweltbelastung bei der Benutzung verursacht. Weiterhin soll das Kältemittel eine hohe Kälteleistung, ein günstigen Wärmeübergang und einen niedrigen Preis aufweisen, sowie insbesondere für Einsatzgebiete von -50°C bis zu -100°C, wie bis -85°C, geeignet sein. Dabei soll das Kältemittel bevorzugt eine gute Thermostabilität aufweisen und die Abwärme reduzieren.

### Kurze Beschreibung der Erfindung

Die Aufgabe wird erfindungsgemäß durch eine natürliche Kältemittelmischung gelöst, die keine FCKW oder FKW enthält und als Kältemittel Ethen oder eine Mischung aus Ethen und Ethan aufweist.

Die Verwendung der Naturstoffe erlaubt es auch bei Austritt der Kältemittel, einer Leckage der Anlage, eine Umweltbelastung zu vermeiden. Des Weiteren sind die Stoffe weder schädigend für die Ozonschicht, noch fördern sie den Treibhauseffekt.

Ein weiterer Vorteil der Kältemischung ist ihre Thermostabilität und eine Reduktion der Abgabe von Abwärme im Betrieb in einem Kältesystem.

In einer bevorzugten Ausführungsform ist die Kältemittelmischung eine enthaltend eine Mischung von Ethan und Ethen in einem Gewichtsverhältnis von 10:1 bis zu 1:1000 als Kältemittel.

In einer weiteren Ausführungsform der vorliegenden Erfindung ist die erfindungsgemäße Kältemittelzusammensetzung für Kaskadenschaltungen geeignet, die insbesondere eine Kühlung unterhalb -50°C bis -100°C, wie bis -85°C erlaubt.

Diese Kaltemittelmischungen weisen also als Kältemittel keine anderen Kohlenwasserstoffe und insbesondere kein Propan oder Butan auf.

Solche erfindungsgemäßen Kühlsysteme sind vorteilhafterweise in Tiefkühlgeräten, wie Tiefkühltruhen und Tiefkühlschränken zur Aufbewahrung bei -50°C bis -85°C geeignet zu finden. Eine weitere Ausführungsform der vorliegenden Erfindung richtet sich daher auf entsprechende Kühlsysteme insbesondere Tiefkühlgeräte, wie Tiefkühltruhen und Tiefkühlschränke aus Kaskadenschaltungen, so genannte Kaskadenkühlungssysteme, bei der die erfindungsgemäßen Kältemittelmischungen in der zweiten Stufe eingesetzt werden.

Bevorzugt findet in der ersten Stufe dieses Kaskadensystems Propan als Kältemittel Anwendung.

Schließlich richtet sich die vorliegende Erfindung auf die Verwendung dieser Kältemittelzusammensetzungen beziehungsweise der Kaskadenkühlungssysteme in Kühlsystemen, wie Tiefkühlgeräten zum Kühlen in Bereiche von bis zu -100°C.

### Ausführliche Beschreibung der Erfindung

Die vorliegende Erfindung richtet sich auf Kältemittelmischungen, die keine FCKW oder FKW beinhalten und die geeignet sind in Bereichen von bis zu -100°C, wie bis zu -85°C zu Kühlen, mit Ethen oder eine Mischung aus Ethen und Ethan als Kältemittel.

In einer Ausführungsform der vorliegenden Erfindung liegt die Mischung von Ethan und Ethen als Kältemittel in einem Verhältnis von 10:1 1 bis 1:1000 vor, insbesondere in einem Verhältnis von 10:1 bis 1:100, wie 10:1 bis 1:10. In einer bevorzugten Ausführungsform ist das Verhältnis von Ethan zu Ethen in einem Bereich von 9:1 bis 1:1. Zum Beispiel findet eine Zusammensetzung mit einem Mischungsverhältnis von 85 Gew.-% Ethan zu 15 Gew.-% E-then oder von 50 Gew.-% Ethan und 50 Gew.-% Ethen als Kältemittel in einer erfindungsgemäßen Kältemittelmischung Anwendung.

Erfindungsgemäß kann diese Kältemittelmischung weitere übliche Inhaltsstoffe solcher Kältemittelmischungen enthalten, wie insbesondere übliche Mineralöle zur Schmierung. Dabei können handelsübliche Mineralöle, wie sie z.B. bereits eingesetzt wurden, mit entsprechender Viskosität verwendet werden. Die erfindungsgemäßen Mischungen beinhalten keine weiteren Kältemittel, insbesondere kein Propan oder Butan, Methan oder Stickstoff etc.

Besonders bevorzugt ist die Kältemischung eine aus Ethan, Ethen und Mineralöl.

Diese erfindungsgemäßen Kältemittelmischungen setzen sich aus natürlichen Inhaltstoffen zusammen, so dass die Gefährdungspotenziale für Mensch und Umwelt gering sind. Insbesondere unter Berücksichtigung der sich ändernden Gesetzeslage und der Anforderungen der Wirtschaft ermöglichen die erfindungsgemäßen Kältemittelmischungen die Bereitstellung von Kühlsystemen, insbesondere Tiefkühlsystemen, die ein Kühlen in Bereichen von -50°C bis zu -100°C erlauben, wie bis zu -85°C, wie -80°C, insbesondere -75°C. Dabei erlaubt die Verwendung dieser erfindungsgemäßen Kältemittelmischungen, die natürliche Inhaltsstoffe aufweisen, eine einfache unproblematische Entsorgung nach Gebrauch. Insbesondere sind die erfindungsgemäßen Kältemittelmischungen nicht als Sondermüll zu entsorgen, beeinflussen nicht negativ das Ozonschild in der Stratosphäre und tragen nicht zum Treibhauseffekt bei. Vielmehr ermöglichen die erfindungsgemäßen Kältemittelmischungen den Betrieb von Kältesystemen ohne Verwendung von FCKW oder FKW.

Insbesondere die Mischung aus Ethen und Ethan ermöglicht es in einem Kaskadenkühlungssystem Kühlbereiche von bis zu -100°C, wie -95°C, z. B. -90°C oder -85°C zu erzielen. Die Verwendung von Ethan als Kältemittel alleine ist nicht vorteilhaft, da das in der Kältemittelmischung vorhandene Mineralöl ausgewaschen werden würde. Ethen hingegen zeigt im System eine vorteilhafte Wirkung als Schmiermittel. Bevorzugt findet die erfindungsgemäße Kältemittelmischung Anwendung in Kaskadenkühlungssystemen. Kaskadenkühlungssysteme beziehungsweise Kaskadenschaltungen erlauben ein einfaches Kühlen im Bereich von z. B. bis zu -100°C, wie bis zu -85°C. Bei Kaskadenschaltungen werden mehrere Kälteanlagen hintereinander geschaltet, so dass immer der Verdampfer der oberen Stufe gleichzeitig der Verflüssiger der unteren Stufe ist. Die Kaskadenschaltung von Kälteanlagen ist besonders dort wichtig, wo mit einem Kältemittel die erforderlichen tieferen Temperaturen nicht erreicht werden.

Erfindungsgemäß beinhalten die Kaskadensysteme in ihrer ersten Stufe, der Hochtemperaturstufe, ein erstes Kältemittel, bevorzugt Propan und in der zweiten Stufe, der Niedrigtemperaturstufe, die erfindungsgemäßen Kältemittelmischungen.

Es zeigte sich, dass Ethen oder Mischungen aus Ethan und Ethen in der Lage sind, den Anforderungen an ein Kältemittel in einem Kaskadenkühlungssystem, insbesondere in der Niedrigtemperaturstufe eines Kaskadenkühlungssystems zu genügen. Sie sind in diesen Tieftemperaturbereichen thermostabil. Insbesondere erlaubt die Verwendung eines Kaskadenkühlungssystems mit dem Propan in der ersten Stufe und Ethan/Ethenmischung beziehungsweise Ethen alleine in der zweiten Stufe die Bereitstellung von Kühlsystemen, die den Anforderungen genügen, FCKW und FKW freie Kühlsysteme bereitzustellen, insbesondere unter dem Gesichtspunkt der Vermeidung von Sondermüll bei der Entsorgung von verbrauchten Kältemitteln.

Ein weiterer Vorteil ist bei Verwendung der erfindungsgemäßen Kältemittelmischung in dem Kühlsystem die Möglichkeit die Abwärme deutlich zu reduzieren.

Des Weiteren ermöglicht die Verwendung der erfindungsgemäßen Kältemittelmischungen deren Einsatz in konventionellen Kühlsystemen mit insbesondere einer Kaskadenkühlung.

In einer weiteren Ausführungsform stellt die vorliegende Erfindung daher Kühlsysteme bereit, die als Kältemittel die erfindungsgemäßen Kältemittelmischungen enthalten. Hierbei handelt es sich insbesondere um Kühlsysteme mit einer Kaskadenkühlung, geeignet zur Kühlung auf Bereiche von bis zu -100°C, z. B. bis zu -85°C, zum Beispiel in Bereichen von -50°C bis -85°C, insbesondere -70°C bis -85°C.

Bei diesen Kühlsystemen handelt es sich um Tiefkühlgeräte, insbesondere Tiefkühltruhen und Tiefkühlschränke. Diese Kühlsysteme sind zur Lagerung jeglicher Art von Tiefkühlgut geeignet, insbesondere auch zur Lagerung von biologischen und / oder chemischen Materialien, in Bereichen von -50°C bis -85°C. Bei dieser Lagerung handelt es sich insbesondere auch um Dauerlagerungen der Proben, so dass eine verlässliche Lagerung möglich ist.

Die Kühlsysteme erfüllen des Weiteren die Anforderungen an Umweltverträglichkeit und Explosionssicherheit und erlauben einen langjährigen Betrieb der Kühlsysteme bei Verwendung der erfindungsgemäßen Kältemittelmischungen.

In einem weiteren Aspekt betrifft die vorliegende Erfindung die Verwendung der erfindungsgemäßen Kältemittelzusammensetzungen in Kühl- und Kältevorrichtungen, insbesondere in Kaskadenkühlsystemen zum Kühlen auf Bereiche von bis zu -100°C, insbesondere in Bereiche von -50°C bis -85°C.

### Ausführungsbeispiele

Im Folgenden wird die Erfindung mit einem Beispiel zur besseren Darstellung näher erläutert. Es ist klar, dass sich die vorliegende Erfindung nicht auf dieses Beispiel beschränkt.

### Beispiel 1

### Kältemittelmischung

Eine Kältemittelmischung wurde in einem Mischungsverhältnis von 85 Gew.-% R170 (Ethan) und 15 Gew.-% R1150 (Ethen) hergestellt.

Ein Versuchstiefkühlschrank mit einem Gesamtvolumen an Kältemittelmischungen von 570 g wurde betrieben. Hierbei wurde ein zweistufiges Kaskadensystem eingesetzt. Dabei wurde in der ersten Stufe 480g Propan und in der zweiten Stufe 90g der o.g. erfindungsgemäßen Kältemittelmischung eingesetzt. Dabei zeichnete sich die Kältemischung durch eine gute Thermostabilität aus. Des Weiteren gab das Gerät im Vergleich zu handelsüblichen Geräten mit einem zweistufigen Kaskadensystem, mit R507, einem azeotropen Gemisch von R 125 (Pentafluorethan) und R143a (1, 1, 1 Trifluorethan) in der Hochtemperaturstufe und einer Mischung von R23 (Trifluormethan) und R170 (Ethan) in der Niedrigtemperaturstufe als Kältemittelmischung deutlich weniger Abwärme ab. Das Gerät lief dabei über einen Zeitraum von über 1,5 Jahren mit einer Kühltemperatur von -85°C.

### Beispiel 2

### Kältemittelmischung

Eine Kältemittelmischung wurde in einem Mischungsverhältnis von 50 Gew.-% R170 (Ethan) und 50 Gew.-% R1150 (Ethen) hergestellt.

Ein Versuchstiefkühlschrank mit einem Gesamtvolumen an Kältemittelmischungen von 390 g wurde betrieben. Hierbei wurde ein zweistufiges Kaskadensystem eingesetzt. Dabei wurde in der ersten Stufe 330g Propan und in der zweiten Stufe 60g der o.g. erfindungsgemäßen Kältemittelmischung eingesetzt. Dabei zeichnete sich die Kältemischung durch eine gute Thermostabilität aus. Des Weiteren gab das Gerät im Vergleich zu handelsüblichen Geräten mit einem zweistufigen Kaskadensystem, mit R507, einem azeotropen Gemisch von R 125 (Pentafluorethan) und R143a (1, 1, 1 Trifluorethan) in der Hochtemperaturstufe und einer Mischung von R23 (Trifluormethan) und R170 (Ethan) in der Niedrigtemperaturstufe als Kältemittelmischung deutlich weniger Abwärme ab. Das Gerät lief dabei über einen Zeitraum von über 1,5 Jahren mit einer Kühltemperatur von -85°C.

Die obigen Beispiele zeigen, dass Tiefkühlgeräte mit natürlichen Kältemittelmischungen betrieben werden können und ermöglicht somit eine vom Markt geforderte Alternative zu herkömmlichen Sicherheitskältemitteln, wie zum Beispiel R22 oder R502 oder Kältemittelgemische, die ein Vorhandensein von mindestens teilhalogenierten Fluorkohlenwasserstoffen erfordern.

## Patentansprüche

1. Kältemittelmischung, die keine FCKW oder FKW beinhaltet und die geeignet ist im Bereich von bis zu -100° C zu kühlen, mit Ethen oder einer Mischung aus Ethen und Ethan als Kältemittel.

2. Kältemittelmischung nach Anspruch 1 mit einer Mischung aus Ethan und Ethen in einem Verhältnis von 10:1 bis 1:1000.

3. Kältemittelmischung nach Anspruch 2 mit einer Mischung von Ethan und Ethen in einem Verhältnis von 9:1 bis 1:1.

4. Kältemittelmischung nach einem der vorherigen Ansprüche geeignet zum Kühlen in einem Bereich von bis zu -85°C.

5. Kältemittelmischung nach einem der vorherigen Ansprüche zur Verwendung in einer Kaskadenkühlung.

6. Kältemittelmischung nach Anspruch 5, wobei diese in der Niedrigtemperaturstufe der Kaskadenkühlung eingesetzt wird.

7. Kaskadenkühlungssystem enthaltend als eine Kältemittelmischung in einer Stufe des Kaskadenkühlungssystem eine Kältemittelmischung nach einem der Ansprüche 1 bis 6.

8. Kaskadenkühlungssystem nach Anspruch 7, wobei die Kältemittelmischung nach einem der Ansprüche 1 bis 6 in der Niedrigtemperaturstufe der Kaskadenkühlung eingesetzt wird.

9. Kaskadenkühlungssystem nach einem der Ansprüche 7 oder 8, wobei die Kältemittelmischung der Hochtemperaturstufe Propan enthält.

10. Kühlsystem mit einer Kältemittelmischung nach einem der Ansprüche 1 bis 6 oder einem Kaskadenkühlungssystem nach einem der Ansprüche 7 bis 9.

11. Tiefkühlschrank oder Tiefkühltruhe mit einer Kältemittelmischung nach einem der Ansprüche 1 bis 6 oder einem Kaskadenkühlungssystem nach einem der Ansprüche 7 bis 9.

12. Kühlsystem nach Anspruch 10 oder 11, wobei dieses ein Kühlen auf mindestens -50°C bis mindestens -85°C erlaubt.

13. Verwendung einer Zusammensetzung aus Ethen oder eine Mischung aus Ethen und Ethan in einem Kühlsystem.

14. Verwendung einer Kältemittelmischung nach einem der Ansprüche 1 bis 6 oder eines Kaskadenkühlungssystems nach einem der Ansprüche 7 bis 9 in Tiefkühlsystemen zur Kühlung in einem Bereich von -50°C bis -85°C.
